# EUROPÄISCHE PATENTANMELDUNG

(11) **EP 2 664 821 A1**
(43) Veröffentlichungstag der Anmeldung: **20.11.2013**
(21) Anmeldenummer: 12003880.7
(22) Anmeldetag: 16.05.2012
(51) Int. Cl.: F16H 1/16

(54) **Vorrichtung zur verdrehbaren Kopplung zweier Baugruppen**

(71) Anmelder: IMO Holding GmbH, 91350 Gremsdorf (DE)
(72) Erfinder: Frank, Hubertus, 91315 Höchstadt/Aisch (DE); Völlner, Martin, 91315 Höchstadt/Aisch (DE)
(74) Vertreter: Küchler, Stefan

(57) **Zusammenfassung**

Die Erfindung richtet sich auf einen Schwenktrieb umfassend ein erstes, ringförmiges, an seinem Außenumfang von einer Verzahnung umgebenes Anschlusselement zum Anschluss an einem ersten Maschinenteil, Chassis, Fundament od. dgl., sowie ein dieses Anschlusselement (2) in Form eines Gehäuses (21,21',21'') mit einem Spalt (3) außen umgebendes, zweites Anschlusselement (4) zum Anschluss an einem gegenüber dem ersten Maschinen- oder Anlagenteil verdreh- oder verschwenkbaren, zweiten Maschinen- oder Anlagenteil, wobei in dem Spalt (3) zwischen den beiden Anschlusselementen (2,4), ein oder mehrere Reihen von Wälzkörpern (33) zur verdrehbaren Lagerung (23) der beiden Anschlusselemente (2,4) aneinander sowie zur Aufnahme von Axial- und Radialkräften und Kippmomenten vorgesehen sind, und wobei an dem Gehäuse (21) ein Ansatz (29,31) zur Aufnahme und Lagerung (23) einer mit der Verzahnung (26) des ersten Anschlusselements (2) kämmenden Schnecke (28) vorgesehen ist, und wobei ferner die Einhüllende (41) des Gewindebereichs (36) der Schnecke (28) nicht symmetrisch ist bezüglich einer Querschnittsebene (44) mittig zwischen den beiden stirnseitigen Enden (37,38) des Gewindebereichs (36).

## Beschreibung

Die Erfindung richtet sich auf eine Vorrichtung zur verdrehbaren Kopplung zweier Baugruppen, wie ein Chassis oder Fundament und/oder Maschinen- oder Anlagenteile, umfassend ein erstes, ringförmiges, an seinem Außenumfang von einer Verzahnung umgebenes Anschlusselement zum Anschluss an eine erste Baugruppe, sowie ein dieses Anschlusselement in Form eines Gehäuses mit einem Spalt außen umgebendes, zweites Anschlusselement zum Anschluss an eine zweite Baugruppe, wobei in dem Spalt zwischen den beiden Anschlusselementen ein oder mehrere Reihen von Wälzkörpern zur verdrehbaren Lagerung der beiden Anschlusselemente aneinander sowie zur Aufnahme von Axial- und Radialkräften und Kippmomenten vorgesehen sind, und wobei an dem Gehäuse ein Ansatz zur Aufnahme und Lagerung einer mit der Verzahnung des ersten Anschlusselements kämmenden Schnecke vorgesehen ist.

Für die Gestaltung des kämmenden Eingriffs zwischen einem Schneckenrad und einer Schnecke gibt es mehrere Varianten. Im einfachsten Fall ist das Schneckenrad gerade verzahnt, wobei die einzelnen Zähne jeweils eine rechteckige Gestalt aufweisen, und die Schnecke ist zylindrisch geformt mit einem Gewinde mit konstanter Steigung. Um den Zahneingriffsbereich zu optimieren, kann einerseits die Gestalt der Zähne des Schneckenrades an die Wölbung der Schnecke angepaßt sein, so dass die freien Stirnseiten der Zähne keinem geraden bzw. ebenen Verlauf folgen, sondern einem gebogenen bzw. konkav gewölbten Verlauf. Umgekehrt muß das Gewinde der Schnecke nicht in die Mantelfläche eines Zylinders eingearbeitet sein, sondern kann statt dessen auch in einen rotationssymmetrischen Körper mit einer taillierten Gestalt ähnlich einer Sanduhr eingearbeitet sein. Beide Maßnahmen zielen darauf ab, eine möglichst optimale Schmiegung zwischen den miteinander kämmenden Verzahnungen zu erreichen und dadurch den Kontaktbereich zu vergrößern, damit bei gleichem Flächendruck größere Drehmomente übertragen werden können oder bei gleichem Drehmoment der Flächendruck und damit die Materialbelastung reduziert wird. Ein Nachteil dabei ist jedoch, dass durch die beiden obigen Maßnahmen die Montage und/oder Demontage der Vorrichtung erschwert wird. Denn die Verbesserung der Schmiegung geht einher mit einem gegenseitigen Ein- oder Umgreifen, also einer Struktur, welche beim Annähern oder Entfernen von Schnecke und Schneckenrad hinderlich ist. Im ungünstigsten Fall kann weder die Schnecke in ihrer Längsrichtung verschoben werden, weil das Schneckenrad in ihren Taillenbereich eingreift, und auch ein Herausheben des Schneckenrades aus seinem Gehäuse wird durch eine gleichzeitig über- und untergriffene Schnecke behindert. Ein möglicher Ausweg könnte sein, das Gehäuse sowie das Schneckenrad und/oder die Schnecke geteilt auszuführen und erst bei dem Einbau in das Gehäuse die einzelnen Teile zusammenzusetzen. Solches ist aber äußert aufwändig und eine Unterteilung im Bereich einer Verzahnung führt außerdem zu einem erhöhten Verschleiß und damit zu einer reduzierten Betriebsdauer.

Aus den Nachteilen des beschriebenen Standes der Technik resultiert das die Erfindung initiierende Problem, bei einer gattungsgemäßen Vorrichtung den Zahneingriffsbereich derart zu optimieren, dass dadurch weder Montage oder Demontage erschwert werden und insbesondere auch eine maximale Betriebsdauer erreicht werden kann.

Die Lösung dieses Problems gelingt dadurch, dass die Einhüllende des Gewinde- oder Verzahnungsbereichs der Schnecke nicht symmetrisch ist bezüglich einer Querschnittsebene mittig zwischen den beiden stirnseitigen Enden des Gewinde- oder Verzahnungsbereichs der Schnecke.

Die erfindungsgemäße Abkehr von einer Schnecke, deren Einhüllende symmetrisch ist bezüglich einer mittigen Querschnittsebene, leistet das Gewünschte: Ein Teil der asymmetrischen Einhüllenden schmiegt sich an das Schneckenrad an und perfektioniert damit den Zahneingriffsbereich - im Gegensatz zu einem anderen Teil der Einhüllenden, desen Schmiegung geringer ausfällt und damit den Zahneingriffsbereich begrenzt, aufgrunddessen aber auch eine leichte Montage und/oder Demontage erlaubt. Dabei kann im Idealfall die Schnecke in ihrer Längsrichtung gegenüber dem Schneckenrad verschoben werden, so dass die Querschnittsgeometrie der Schneckenradverzahnung für das Verhalten beim Zusammenbau unerheblich ist.

Eine bevorzugte Ausprägung findet das erfindungsgemäße Merkmal einer asymmetrischen Schnecke darin, dass der Durchmesser der Einhüllenden des Verzahnungsbereichs der Schnecke an einem stirnseitigen Ende der Verzahnung kleiner ist als an dem anderen stirnseitigen Ende der Verzahnung. Wie die Erfindung zeigt, gibt es in der Praxis gar keinen Zwang, weswegen die beiden Enden der Schnecke gleich groß sein sollten. Vielmehr gibt es hier einen gewissen Konstruktionsspielraum, der von der Erfindung genutzt wird, um die Montage und Demontage zu erleichtern.

Es hat sich als günstig erwiesen, dass die Umhüllende der Schneckenverzahnung sich zwischen den beiden stirnseitigen Enden der Verzahnung in einer axialen Richtung zumindest bereichsweise stetig und differenzierbar verjüngt und in dem ggf. verbleibenden Bereich jedenfalls nicht erweitert. Sofern man neben einem solchen Verjüngungsbereich auch einen anderen Bereich unterscheiden kann, so grenzen diese jedenfalls in axialer Richtung aneinander. Bevorzugt befindet sich ein Übergang zwischen beiden Bereichen etwa an einer Stelle minimalen Abstandes zwischen der Schnecke und der Drehachse des Schwenktriebs. Dort strebt der Durchmesser des Verjüngungsbereichs seinen minimalen Wert an, welcher sich in dem anschließenden Bereich jenseits der Stelle des minimalen Abstandes jedenfalls nicht mehr vergrößert. Während die primäre Aufgabe des Verjüngungsbereich darin besteht, sich möglichst optimal an das Schneckenrad anzuschmiegen, soll der daran angrenzende Bereich dank seines nicht jedenfalls mehr zunehmenden Durchmessers eine Montage oder Demontage der Schnecke erleichtern, indem diese bei gelöstem Lagerdeckel in ihrer Axialrichtung aus dem Schneckengehäuse herausgezogen oder - geschraubt werden kann, und zwar derart, dass der Bereich minimalen Durchmessers beim Ein- und Ausbau an dem Eingriffsbereich mit dem Schneckenrad vorbeibewegt wird.

Die Erfindung läßt sich dahingehend weiterbilden, dass das Schneckengewinde an einer ersten Seite einer von der Längsachse der Schnecke lotrecht durchsetzten Schnittebene durch den Drehmittelpunkt des Schwenktriebs als Globoidgewinde ausgebildet ist, d. h. mit einer Einhüllenden, die durch einen um die Längsachse der Schnecke rotierenden (virtuellen) Kreis etwa von der Abmessung und der Lage der Einhüllenden der Schneckenradverzahnung gebildet wird. Dabei liegt der Mittelpunkt des virtuellen Kreises ursprünglich in der Haupt-Drehachse des Schwenktriebs und bewegt sich bei seinem virtuellen Umlauf um die Längsachse der Schnecke auf einer Kreisbahn innerhalb der von der Längsachse der Schnecke lotrecht durchsetzten Schnittebene durch den Drehmittelpunkt des Schwenktriebs. Bei einem Radius R des Schneckenrades und einem Radius r der Schnecke im Bereich der netreffenden Schneckenquerschnittsebene durch den Drehmittelpunkt des Schwenktriebs hat der Mittelpunkt der Haupt-Drehachse des Lagers etwa einen Abstand ρ = R + r von der Schneckenlängsachse; dieser Wert entspricht dem Radius des virtuellen Kreises, den der Kreis vom Radius R beim Erzeugen der Oberfläche des Globoids durchläuft. Das Globoid wird dabei allerdings nicht durch den Innenraum des virtuell umlaufenden Kreises erzeugt; denn dieser Innenraum würde einen Torus erzeugen. Das Globoid ist vielmehr der Bereich radial innerhalb des Torus, in der Umgebung der Schneckenachse. Mit einem solchen Gewinde lässt sich eine maximale Schmiegung bzw. ein möglichst großer Eingriffsbereich realisieren.

Andererseits liegt es im Rahmen der Erfindung, dass das Schneckengewinde an einer zweiten Seite jenseits einer von der Längsachse der Schnecke lotrecht durchsetzten Schnittebene durch den Drehmittelpunkt des Schwenktriebs nicht als Globoidgewinde ausgebildet ist, d. h. nicht mit einer Einhüllenden, die durch einen um die Längsachse der Schnecke rotierenden Kreis etwa von der Abmessung und der Lage der Einhüllenden der Schneckenradverzahnung gebildet wird. In diesem Bereich schmiegt sich also die Schnecke nicht an das Schneckenrad an, sondern es klafft eine in axialer Richtung der Schnecke stetig zunehmende Lücke zwischen Schnecke und Schneckenrad, welche das Zusammenfügen der beiden Teile erheblich begünstigt. Andererseits findet dieser Bereich seine Rechtfertigung dadurch, dass genügend Spielraum für eine axiale Verschiebung der Schnecke zur Verfügung steht, so dass ein optimaler Verzahnungseingriff eingestellt werden kann. Auch könnte eine Federung der Schnecke in axialer Richtung vorgesehen sein, bspw. um axiale Stöße zu dämpfen, wie sie bspw. bei abrupten Lastwechesln auftreten können. Eine solche Federung kann bspw. mittels vorgespannter Tellerfedern oder Tellerfederpakete realisiert werden, welche die Schnecke in einer axialen Richtung drücken. Sind derartige Tellerfedern oder Tellerfederpakete an beiden Enden der Schnecke vorgesehen, so wird dadurch eine selbsttätige Zentrierung der Schnecke in ihrer Längsrichtung bewirkt, wobei axiale Stöße in beiden Richtungen abgefedert werden, also Drehmomentstöße in beiden Drehrichtungen.

Eine andere Ausführungsform der Erfindung zeichnet sich dadurch aus, dass das Gewinde der Schnecke an einer zweiten, dem Globoidgewinde gegenüber liegenden Seite einer von der Längsachse der Schnecke lotrecht durchsetzten Schnittebene durch den Drehmittelpunkt des Schwenktriebs eine zylindrische oder kegelig sich verjüngende Einhüllende aufweist. Beide Varianten sind grundsätzlich denkbar; allerdings dürfte in vielen Fällen eine zylindrische Einhüllende einer kegeligen Einhüllenden vorzuziehen sein, da solchermaßen an der Stelle minimalen Abstandes zwischen der Hauptachse des Schwenktriebs oder der Schneckenradachse einerseits und der Schneckenachse andererseits stets ein ausreichender Verzahnungseingriff gewährleistet ist, selbst bei einer relativ großen axialen Verlagerung der Schnecke.

Besondere Vorteile bietet eine Anordnung, wobei die Umhüllende des Globoidgewindeabschnitts stetig und differenzierbar in die Umhüllende des anschließenden Gewndebereichs übergeht. An dieser Stelle sollte sich der Charakter der Umhüllenden möglichst sanft ändern, um Kanten oder sonstige, verschleißfördernde Elemente zu vermeiden. Dies trifft aber nicht nur auf die Umhüllende des Globoidgewindeabschnitts zu, sondern auch auf die Steigung des Gewindes und somit auf den Verlauf der Gewindeerhebung. Auch diese Parameter sollten sich am Übergang zwischen den verschiedenen Bereichen stetig und differenzierbar fortsetzen.

Die Gewindebereiche zu beiden Seiten der von der Längsachse der Schnecke lotrecht durchsetzten Schnittebene durch den Drehmittelpunkt des Schwenktriebs können unterschiedliche Längen aufweisen. Die Längserstreckung eines Gewindezylinders einer Schnecke ist zwar nicht begrenzt, insbesondere nicht unter dem Gesichtspunkt des Klemmens, da sich die zurückweichede Verzahnung des Schneckenrades bzw. verzahnten Anschlusselements rasch von dem Schneckengewinde entfernt. Da aus diesem Grunde der Zahn-Gewinde-Kontakt auf einen kurzen Abschnitt der Schnecke begrenzt ist, macht ein längerer Gewindezylinder allerdings wenig Sinn. Bei einem Globoidgewinde andererseits ist infolge der Schmiegung ein relativ großer Zahn-Gewinde-Kontakt möglich. Alledings wird dabei die Zahnflankengeometrie mit zunehmender Entfernung von dem Bereich minimalen Abstandes zwischen Schneckenachse einerseits und Schneckenradachse andererseits beständig ungünstiger; insbesondere wird bald ein Zustand erreicht, wobei die Lücke zwischen zwei benachbarten Zähnen des Schneckenrades von der Schnecke aus gesehen nicht mehr als Tal mit zwei Hängen erscheint, sondern als Hinterschneidung nach Art eines Tals mit einem Häng und einem Überhang, so dass dort der Gewindebereich der Schnecke nicht mit beiden Flanken eines Zahnes mehr in großflächigen Eingriff mehr treten kann, sondern allenfalls noch mit jeweils einer Flanke jedes Zahns, und mit der anderen Flanke höchstens noch eine etwa punktuelle Berührung ausbilden kann. Praktischerweise ist daher die Längserstreckung eines Globoidgewindes begrenzt, in welcher eine nennenswerte Kraftübertragung möglich ist, unter gleichzeitiger Vermeidung eines Klemmens. Aus diesem Grunde sind die Längserstreckungen der beiden Gewindeabschnitte nicht voneinander abhängig, sondern können nach unterschiedlichen Gesichtspunkten festgelegt werden.

Die Erfindung empfiehlt, dass die Länge des nicht von einem Globoid umhüllten Verzahnungsbereichs kürzer ist als die Länge der Globoidverzahnung. Dies resultiert vor allem aus dem räumlich eng begrenzten Zahn-Gewinde-Kontakt zwischen einem Gewindezylinder und einem Schneckenrad.

Erfindungsgemäß ist sogar die Möglichkeit eröffnet, dass das Schneckengewinde nur von einer Seite bis zu einer von der Längsachse der Schnecke lotrecht durchsetzten Schnittebene durch den Drehmittelpunkt des Schwenktriebs heranreicht und dort oder in deren Umgebung endet. Insbesondere wenn eine axiale Verlagerung der Schnecke nicht beabsichtigt ist, kann auf einen zylindrischen Gewindeabschnitt ggf. völlig verzichtet werden. Die Länge L_{Z} eines eventuell noch verbleibenden, vorzugsweise zylindrischen Gewindeanteils jenseits der von der Längsachse der Schnecke lotrecht durchsetzten Schnittebene durch den Drehmittelpunkt des Schwenktriebs kann gleich oder kleiner sein als die Hälfte der Länge L_{G} des Globoidgewindeabschnitts diesseits dieser Schnittebene: L_{Z} ≤ L_{G}/2, beispielsweise gleich oder kleiner als ein Drittel der Länge L_{G} des Golboidgewindes: L_{Z} ≤ L_{G}/3, vorzugsweise gleich oder kleiner als ein Viertel der Länge L_{G} des Golboidgewindes: L_{Z} ≤ L_{G}/4, insbesondere gleich oder kleiner als ein Fünftel der Länge L_{G} des Golboidgewindes: L_{Z} ≤ L_{G}/5, oder gar gleich oder kleiner als ein Zehntel der Länge L_{G} des Golboidgewindes: L_{Z} ≤ L_{G}/10.

Weitere Vorteile ergeben sich dadurch, dass die Schnecke nur im Bereich einer Stirnseite des Verzahnungsbereichs gelagert ist, insbesondere im Bereich der Verzahnungsstirnseite mit dem größeren Durchmesser. Dadurch kann insbesondere der Einbau der Schnecke weiter erleichtert werden, weil nur ein einziges Lager einzusetzen ist.

Erfindungsgemäß ist weiterhin vorgesehen, dass die Längsachse der Schnecke gegenüber der Hauptebene des Schwenktriebs um einen Winkel ϕ geneigt ist. Damit kann eine Schrägverzahnung des verzahnten Anschlusselements vermieden werden, insbesondere wenn der Neigungswinkel ϕ dem Steigungswinkel α = sin (p/2d) des Schneckengewindes auf Höhe der von der Längsachse der Schnecke lotrecht durchsetzten Schnittebene durch den Drehmittelpunkt des Schwenktriebs betragsmäßig entspricht, wobei p die Gewindesteigung und d der Durchmesser der Schnecke auf der betreffenden Schnittebene ist: |α| = |ϕ|. Allerdings sollten diese beiden Winkel sich im Bereich des geringsten Abtandes zwischen der Schneckenachse einerseits und der Schneckenradachse, d.h. der Hauptachse des erfindungsgemäßen Schwenktriebs, andererseits gegenseitig kompensieren, also α + ϕ = 0, so dass der in maximalem Gewindeeingriff stehende Abschnitt des Schneckengewindes lokal etwa parallel zu der Hauptachse des erfindungsgemäßen Schwenktriebs verläuft. Solchenfalls kann die Verzahnung des verzahnten Anschlusselements ohne Schraägung ausgeführt werden, was herstellungstechnische Vorteile nach sich zieht.

Eine weitere Konstruktionsvorschrift sieht vor, dass der Querschnitt des ersten und/oder zweiten Anschlusselements im Bereich einer Stirnseite unterschiedlich zu dem Querschnitt des betreffenden Anschlusselements im Bereich der gegenüber liegenden Stirnseite ist. Da bei jedem Anschlusselement die von den Hauptlagern übertragenen Axial- und Radialkräfte und Kippmomente einerseits sowie das ggf. an der Verzahnung eingeleitete Drehmoment ausschließlich an einer als Anschlussfläche ausgebildeten Stirnseite weitergeleitet werden, während die gegenüber liegende Stirnseite von äußeren Kräften frei ist, ist also der Kraftfluss innerhalb eines Anschlusselements in axialer Richtung stark asymmetrisch. Die Erfindung versucht, diesem Umstand dadurch Rechnung zu tragen, dass sie ein oder beide Anschlusselemente in axialer Richtung asymmetrisch ausbildet, entsprechend der jeweiligen Kraftbelastung. Dies schlägt sich darin nieder, dass die radiale Erstreckung eines Anschlusselements an dessen Anschlussfläche maximal ist und in axialer Richtung hin zu der gegenüber liegenden Stirnseite allmählich abnimmt.

Schließlich entspricht es der Lehre der Erfindung, dass der Querschnitt des ersten Anschlusselements an einer ersten Stirnseite des Lagers gegenüber dem Querschnitt an der gegenüberliegenden Stirnseite verjüngt ist, während der Querschnitt des zweiten Anschlusselements an der ersten Stirnseite des Lagers gegenüber dem Querschnitt an der gegenüber liegenden Stirnseite verbreitert ist. Eine solche Ausführung resultiert aus einer Anordnung der beiden Anschlussflächen an einander gegenüber liegenden Lagerstirnseiten. Demgemäß befindet sich der maximal belastete Bereich beider Anschlusselemente an unterschiedlichen Lagerstirnseiten; dort weisen diese jeweils eine maximale Radialerstreckung auf und verjüngen sich von dort aus in antiparallelen Richtungen.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:

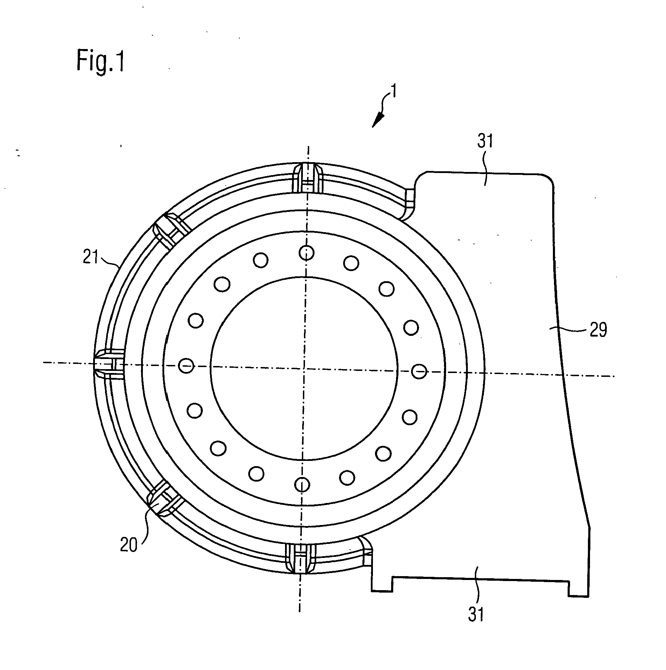

- Fig. 1: einen erfindungsgemäßen Schwenktrieb in der Draufsicht;
- Fig. 2: eine Seitenansicht des Schwenktriebs aus Fig. 1, in Längsrichtung der Schnecke;
- Fig. 3: einen Horizontalschnitt durch den Schwenktrieb aus Fig. 1 und 2;
- Fig. 4: einen Vertikalschnitt durch den Schwenktrieb aus den Fig. 1 bis 3 quer zur Schneckenlängsachse;
- Fig.5: eine Seitenansicht eines anderen Schwenktriebs, wobei die Längsrichtung der Schnecke parallel zur Papierebene ist;
- Fig. 6: einen Horizontalschnitt durch die Fig. 5 entlang der Linie VI-VI;
- Fig. 7: eine der Fig. 5 entsprechende Darstellung einer abgewandelten Ausführungsform der Erfindung; sowie
- Fig. 8: einen Vertikalschnitt durch den Schwenktrieb aus Fig. 7.

Die in der Zeichnung wiedergegebene Vorrichtung 1 dient der verdrehbaren Kopplung zweier Baugruppen, wie einem Maschinen- oder Anlagenteil mit einem Chassis oder einem Fundament oder mit einem anderen Maschinen- oder Anlagenteil.

Zu diesem Zweck umfasst die Vorrichtung 1 ein erstes, ringförmiges Anschlusselement 2 zum Anschluss an eine erste Baugruppe, während ein dieses Anschlusselement 2 mit einem Spalt 3 außen umgebendes, zweites Anschlusselement 4 den Anschluss an eine andere Baugruppe bewirkt.

Ein oder vorzugsweise beide Anschlusselemente 2, 4 haben eine etwa kreiszylindermantelförmige, im Wesentlichen rotationssymmetrische Grundgestalt und sind derart angeordnet, dass beide Symmetrieachsen miteinander fluchten und eine Drehachse 5 bilden, um welche die beiden angeschlossenen Bauteile gegeneinander verdreht werden können.

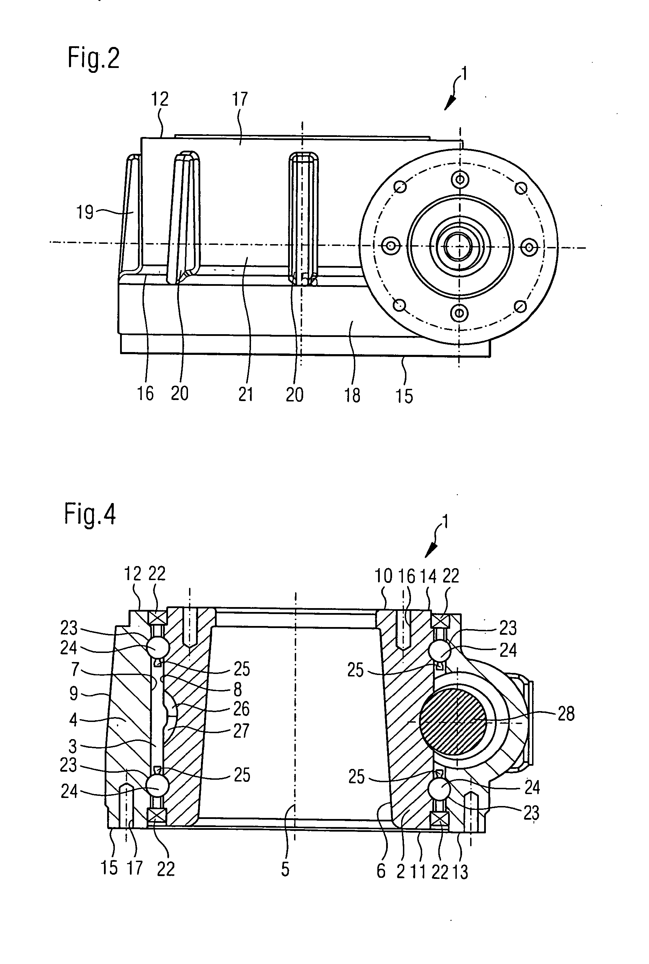

Jedes dieser Anschlusselemente 2, 4 verfügt über eine radial innere Mantelfläche 6, 7 und eine radial äußere Mantelfläche 8, 9 sowie über jeweils zwei Stirnflächen 10, 11, 12, 13. Aufgrund der konzentischen Anordnung weisen insgesamt zwei Stirnseiten, nämlich jeweils eine Sirnseite 10, 12 von jedem Anschlusselement 2, 4, in eine gemeinsame axiale Richtung, also in Fig. 4 bspw. jeweils nach oben, während die anderen beiden Stirnseiten 11, 13 dagegen in die entgegengesetzte axiale Richtung weisen, also in Fig. 4 bspw. nach unten.

Jeweils eine Stirnseite 10-13 jedes Anschlusselements 2, 4 dient als Anschlussfläche 14, 15 zur Anlage an einem anzuschließenden Bauteil und ist als ebene Fläche ausgebildet. Bevorzugt weisen die Anschlussflächen 14, 15 der beiden Anschlusselemente 2, 4 in axial entgegengesetzte Richtungen und überragen die jeweils unmittelbar benachbarte Stirnfläche 11, 12 des jeweils anderen Anschlusselements 4, 2, von welcher sie durch den Spalt 3 beabstandet sind, in axialer Richtung.

Um einen dauerhaften, vollflächigen Kontakt zu einer anzuschließenden Baugruppe sicherzustellen, wird jedes Anschlusselement mit seiner ihm zugeordneten Baugruppe verschraubt. Hierzu sind in jeder Anschlussfläche 14, 15 mehrere Befestigungselemente, beispielsweise in Form von Bohrungen, vorzugsweise als Sacklochbohrungen 16, 17 mit Innengewinde, vorgesehen, insbesondere jeweils kranzförmig um die Drehachse 5 verteilt. Diese Bohrungen, insbesondere Sacklochbohrungen 16, 17, durchsetzen die jeweilige Anschlussfläche 14, 15 lotrecht.

Vorzugsweise ist die Anschlussfläche 14, 15 eines Anschlusselements 2, 4 flächenmäßig größer als die gegenüber liegende Stirnseite 12, 13 des betreffenden Anschlusselements 2, 4, weil nur an einer Anschlussfläche 14, 15 Kräfte und/oder Drehmomente ein- oder ausgeleitet werden, während die gegenüber liegende Stirnseite keine entsprechende Funktion zu erfüllen hat und aus diesem Grunde in radialer Richtung verjüngt ausgebildet werden kann. Eine solche Querschnittsänderung zwischen den beiden Stirnseiten eines Anschlusselements 2, 4 kann bspw. bei dem radial inneren Anschlusselement 2 dadurch bewirkt werden, dass dessen dem Spalt 3 abgewandte Innenseite 6 sich von der Anschlussfläche 14 zu der gegenüber liegenden Stirnseite 11 hin kegelförmig erweitert. Bei dem radial äußeren Anschlusselement 4 hingegen weist die dem Spalt 3 abgewandte, äußere Mantelfläche 9 eine Abstufung 16 auf, von einem radial verjüngten Abschnitt 17 im Bereich der oberen Stirnseite 12 hin zu einem demgegenüber radial erweiterten Abschnitt 18 im Bereich der Anschlussfläche 15. Um den radial verjüngten Abschnitt 17 hinreichend stabil zu gestalten, sind an der dortigen Außenseite 9 noch in axialer Richtung verlaufende Versteifungsrippen 19 angesetzt, welche mit ihrer Außenkante schließlich bündig in den radial erweiterten Abschnitt 18 übergehen.

Das solchermaßen ausgesteifte, äußere Anschlusselement 4 übernimmt dann die Funktion eines das erste Anschlusselement 2 umgebenden Gehäuses 21, während das innere Anschlusselement 2 einerseits die Mittenfreiheit der Vorrichtung 1 sicherstellt und damit die Möglichkeit eröffnet, im Inneren der Vorrichtung 1 von einem der beiden verdrehbar miteinander gekoppelten Bauteile Kabel, etc. zu dem anderen zu führen, und andererseits auch einen Abschluss nach innen hin bewerkstelligt.

Um den Spalt zwischen den beiden Anschlusselementen 2, 4 nach außen vollkommen abzuschließen; sind dessen beide Mündungsbereiche von je einer Dichtung 22 verschlossen und daher vor dem Eintritt von Schmutz oder anderen Partikeln geschützt. Hierbei kann es sich um konventionelle Dichtungen aus Gummi oder einem vergleichbaren Material, insbesondere aus vulkanisertem Kautschuk, handeln, oder um eine Dichtung mit einem Spanndraht, welcher einen laschen- oder schürzenförmigen Dichtungsabschnitt einer an einem, vorzugsweise radial äußeren Anschlusselement 4 festgelegten, flexiblen und/oder elastischen Dichtungsring 22 mit großer Kraft gegen eine Anlauffläche an dem jeweils andern, vorzugsweise radial inneren Anschlusselement 2 presst.

Innerhalb des solchermaßen abgedichteten Spaltes 3 befindet sich, jeweils in unmittelbarer Nachbarschaft einer Dichtung 22, jeweils eine Lagerung 23. Diese beiden Lagerungen 23 können bspw. jeweils identisch aufgebaut sein. Es kann sich hierbei jeweils um Kugellager handeln, bspw. um Radialkugellager oder Vierpunktlager oder um gegeneinander in axialer Richtung vorgespannte Schrägkugellager. Die Kugeln 24 werden von Distanzelementen oder von den Stegen eines Käfigs 25 auf Abstand gehalten.

Andererseits sind auch andere Lagerungen 23 denkbar, bspw. Rollenlagerungen und/oder Lager mit jeweils mehreren Reihen von Wälzkörpern 24. Insgesamt sind in dem Spalt 3 zwischen den beiden Anschlusselementen 2, 4 jedenfalls mindestens zwei - vorzugsweise in axialer Richtung gegeneinander versetzte - Reihen von Wälzkörpern 24 vorgesehen zur verdrehbaren Lagerung der beiden Anschlusselemente 2, 4 aneinander sowie zur Aufnahme von Axial- und Radialkräften und Kippmomenten.

In dem Bereich zwischen zwei axial gegeneinander versetzten Lagerungen 23 ist die dem Spalt 3 zugekehrte Außenseite 8 des inneren Anschlusselements 2 mit einer rundum laufenden Verzahnung 26 versehen, bevorzugt etwa auf mittiger Höhe zwischen den beiden Anschlussflächen 14, 15 und/oder etwa mittig zwischen den beiden Dichtungen 22 und/oder etwa mittig zwischen den beiden Lagerungen 23. Bei der Verzahnung 26 kann es sich um eine gerade Stirnverzahnung handeln, die bspw. außen an einem rundum laufenden Bund angeordnet sein kann, oder um etwa parallel zur Drehachse 5 verlaufende Einkerbungen 27 in dem Außenmantel 6 des inneren Anschlusselements 6, insbesondere um Einkerbungen 27 mit einer in axialer Erstreckungsrichtung gesehen etwa entlang eines Kreisbogens variierenden Tiefe.

Mit dieser Verzahnung 26 kämmt zur Drehverstellung der beiden Anschlusselemente 2, 4 gegeneinander eine vorzugsweise motorisch antreibbare Schnecke 28, die in einer radialen Erweiterung 29 des Gehäuses 21 derart aufgenommen ist, dass ihre Längsachse 30 etwa tangential zu dem die Verzahnung 26 aufweisenden Kreis verläuft bzw. radial außerhalb desselben. Innerhalb von ein oder zwei zu der Längsachse 30 etwa koaxialen Ansätzen 31 des als Gehäuse 21 dienenden, äußeren Anschlusselements 4 ist die Schnecke 28 um ihre Längsachse 30 verdrehbar gelagert. Diese Lagerung 32 kann kann auf unterschiedliche Weise bewerkstelligt sein, bspw. mit einer oder mehreren Reihen von Wälzkörpern 33, bspw. kugelförmigen oder rollenförmigen Wälzkörpern 33, deren Laufbahnen wahlweise direkt in die Schnecke 28 und/oder in das Gehäuse 21 eingearbeitet sind, oder deren Laufbahnen in segment- oder ringförmigen Lagerschalen 34 angeordnet sind.

Der Außenmantel 35 der Schnecke 28 ist jedenfalls bereichsweise mit einem Gewinde 36 versehen, welches in mehreren Windungen um ihre Längsachse 30 umläuft. Für die Gestaltung dieses Gewindebereichs 36 gibt es verschiedene denkbare Gestaltungsvarianten. Zwar könnte der Gewindebereich 36 der Schnecke 28 aus einem Grundkörper mit einem konstanten Außendurchmesser hergestellt sein und eine konstante Steigung aufweisen; bevorzugt ist dies jedoch nicht der Fall. Vielmehr empfiehlt die Erfindung die Herstellung des Gewindebereichs 36 der Schnecke 28 aus einem rotationssymmetrischen Grundkörper, dessen Außendurchmesser sich entlang seiner Längsachse 30 zumindest bereichsweise, insbesondere im Gewindebereich 36, ändert, insbesondere stetig ändert.

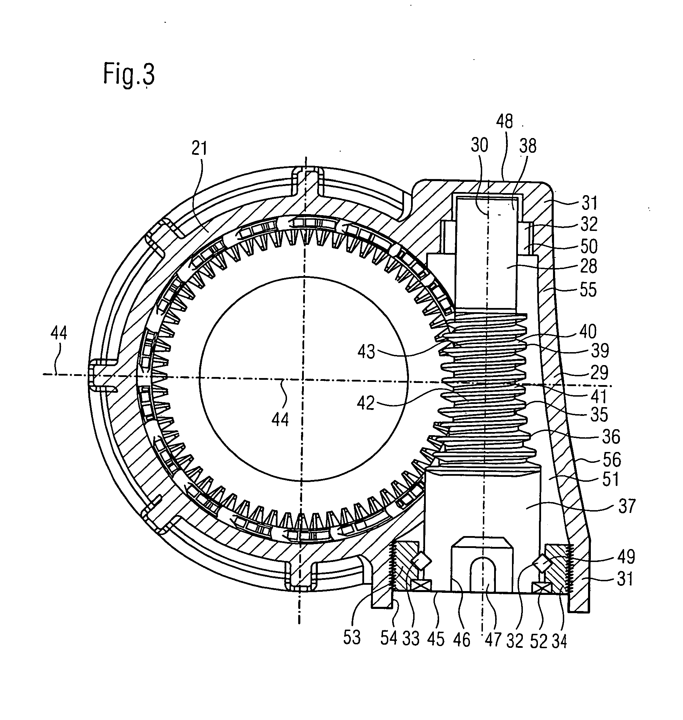

Ein Beispiel hierfür ist in der Draufsicht gemäß Fig. 3 zu erkennen: Die dortige Schnecke 28 ist aus einem rotationssymmetrischen Grundkörper gearbeitet und hat eine Länge, welche etwa dem Außendurchmesser des Gehäuse-Hauptabschnittes 21 entspricht oder etwas kürzer ist als jener.

Die beiden Enden 37, 38 der Schnecke 28 haben jeweils eine substantiell etwa zylindrische Gestalt und dienen der beidseitigen Drehlagerung der Schnecke 28, worauf weiter unten noch im Detail eingegangen wird. Jedoch unterscheiden sich die beiden Schnecken-Enden 37, 38 durch ihren Durchmesser. Es gibt ein dickeres Ende 37 und ein demgegenüber verjüngtes Ende 38.

Den Übergang zwischen den beiden Enden 37, 38 bewerkstelligt der Gewindebereich 36, und zwar zumindest überwiegend entlang einer stetigen Mantelfläche 41, welche durch die freie Kante 39 der Gewindeerhebung(en) 40 markiert ist.

Bei der Ausführungsform nach Fig. 3 ist diese Mantelfläche 41 des ursprünglichen Grundkörpers bzw. die Einhüllende 41 des Gewindebereichs 36 in axialer Richtung aus zwei Abschnitten 42, 43 mit unterschiedlicher Geometrie zusammengesetzt. Diese sind etwa durch eine Ebene 44 voneinander getrennt, die durch die Drehachse 5 der Vorrichtung 1 aufgespannt wird und von der Längsachse 30 der Schnecke 28 lotrecht durchsetzt ist. In dieser Ebene 44 und in deren Umgebung befindet sich der Eingriffsbereich zwischen Schnecke 28 und Verzahnung 26 und wohl auch der Bereich maximaler Kraft- oder Drehmomentübertragung zwischen Schnecke 28 und Verzahnung 26.

Der Bereich 42 zwischen dem dickeren Schnecken-Ende 37 und der Trennungsebene 44 verjüngt sich die Mantelfläche 41 des ursprünglichen Grundkörpers bzw. die Einhüllende 41 des Gewindebereichs 36 in Richtung der Schneckenachse 30 stetig, insbesondere entlang eines Halb-Globoids. Dies bedeutet, dass jeder Punkt der Mantelfläche 41 des ursprünglichen Grundkörpers bzw. der Einhüllenden 41 des Gewindebereichs 36 ein Sattelpunkt ist, wo die Wölbung der betreffenden Fläche in zwei zueinander rechtwinkligen Richtungen entgegengesetzt ist, also konvex einerseits und konkav andererseits. In Richtung eines azimutalen Umlaufs um die Schnecken-Längsachse 30 ist die Wölbung konvex mit einem konstanten Wölbungsradius entsprechend dem jeweiligen Radius der Mantelfläche 41 des ursprünglichen Grundkörpers. Demgegenüber folgt die Wölbung in axialer Richtung der Schnecken-Längsachse 30 konkav; dieser Wölbungsradius entspricht etwa dem Radius R der Verzahnung 26, bezogen auf die Drehachse 5 der Vorrichtung 1, so dass sich der Gewindebereich 36 in dem Abschnitt 42 dem Außenumfang des Verzahnungsbereichs 36 anschmiegt. Dabei liegt der Mittelpunkt der axialen Wölbung dieses Bereichs 42 etwa auf der Drehachse 5 der Vorrichtung, so dass eine Tangente in axialer Richtung an diesen Abschnitt 42 auf axialer Höhe der Ebene 44 etwa parallel zu der Drehachse 30 verläuft.

Jenseits der Ebene 44 - also in dem Abschnitt 43 - folgt die Einhüllende 41 des Gewindebereichs 36 bzw. die Mantelfläche 41 des ursprünglichen Grundkörpers einem zylindrischen Verlauf. Da innerhalb der Übergangs-Ebene 44 der Radius r des zylindrischen Abschnitts 43 gleich dem dortigen Radius des doppelt gewölbten Bereichs 42 ist, kann an dieser Stelle der Gewindebereich 36 nathlos bzw. ohne Kanten oder sonstige Unstetigkeiten fortgesetzt werden. Selbst die Gewindeerhebung(en) folgt (-en) an dieser Stelle einem kontinuierlichen und stetigen Verlauf, so dass sich ein optimaler Eingriff zwischen Schnecke 28 und Verzahnung 26 ergibt, auch trotz der zu der Ebene 44 maximalen Eingriffs asymmetrischen Gestalt der Schnecke 28, deren Axial-Wölbungsradius im Bereich 42 nahe dem dickeren Schnecken-Ende 37 etwa gleich dem halben Durchmesser D/2 = R der Verzahnung 26 ist, im Bereich 43 nahe dem dünneren Schnecken-Ende 38 dagegen etwa unendlich groß ist. Während im zylindrischen Bereich 43 die Gewindesteigung konstant ist, kann diese in dem doppelt gewölbten Bereich 42 in axialer Richtung variieren. Sofern die Verzahnung 26 durch Einkerbungen 27 mit einer in axialer Erstreckungsrichtung gesehen etwa entlang eines Kreisbogens variierenden Tiefe realisiert sind, so hat dieser Kreisbogen etwa einen Wölbungsradius entsprechend dem Schneckenradius r auf der Ebene 44.

Die radiale Erweiterung 29 des Gehäuses 21 zusammen mit ihren beidseitigen Fortsätzen 31 umgibt die Schnecke 28 fast vollkommen; im dargestellten Beispiel ist nur deren Stirnseite 45 am dickeren Ende 37 von außen zugänglich, um die drehfeste Ankopplung an einen Motor oder eine sonstige Antriebseinrichtung zu ermöglichen. Diesem Zweck dient eine zentrale Einsenkung 46 in dieser Stirnseite 45, ggf. mit einer mantelseitigen, zur Längsachse 30 parallelen Nut 47 zum Einlegen einer Feder, um eine drehfeste Verbindung zu einer Motorwelle oder einer anderen Antriebswelle herzustellen.

Die gegenüber liegende Stirnseite 48 ist bevorzugt geschlossen, könnte aber auch einen Zugang zu dem dortigen Schnecken-Ende 38 aufweisen, bspw. zum Anschluss eines Lagegebers, Tachometers od. dgl.

Im dargestellten Beispiel ist die Schnecke 28 an ihren beiden Enden 37, 38 gelagert, am dickeren Schnecken-Ende 37 mit einem ersten Wälzlager 49, vorzugsweise einem kombinierten Axial- und Radiallager, insbesondere einem Schrägrollenlager, ggf. mit kreuzweise versetzt orientierten Rollen, und am dünneren Schnecken-Ende 38 mit einem zweiten Wälzlager 50, vorzugsweise einem Radiallager, insbesondere einem Rollenlager. Außerhalb des ersten Wälzlagers 49 ist der Spalt 51 zwischen der Schnecke 28 und dem diese aufnehmenden Gehäuse 29, 31 durch eine rundum laufende Dichtung 52 verschlossen.

Als Pendant zu der Schnecke 28 jenseits des Spaltes 51 kann ein Ring 53 vorgesehen sein, welcher bspw. die radial äußeren Laufbahn(en) für das erste Wälzlager 49 und/oder die Verankerung oder die Anlauffläche für die Dichtung 52 aufweist. Dieser Ring 53 kann in die Öffnung 54 des Gehäuses 29, 31 für die Schnecke 28 eingesetzt oder eingeschraubt und dort fixiert sein, bspw. durch Verschweißen, Verkleben oder mittels eines Konterelements.

Der Mantelabschnitt 55 des Schnecken-Gehäuses 29, 31 kann zumindest an seiner Außenseite 56 eine einheitliche Wölbung in axialer Richtung aufweisen, wie in Fig. 3 zu erkennen. Bevorzugt ist die Außenseite 56 des die Schnecke 28 aufnehmenden Gehäuseteils 29, 31 ebenfalls doppelt gewölbt. Es kann sich hierbei bspw. um ein Gußteil handeln, welches an besonders wichtigen Stellen spanabhebend nachbearbeitet ist.

Vorzugsweise ist das gesamte Gehäuse 21, 29, 31 mit einem Schmiermittel gefüllt, bspw. mit Schmierfett.

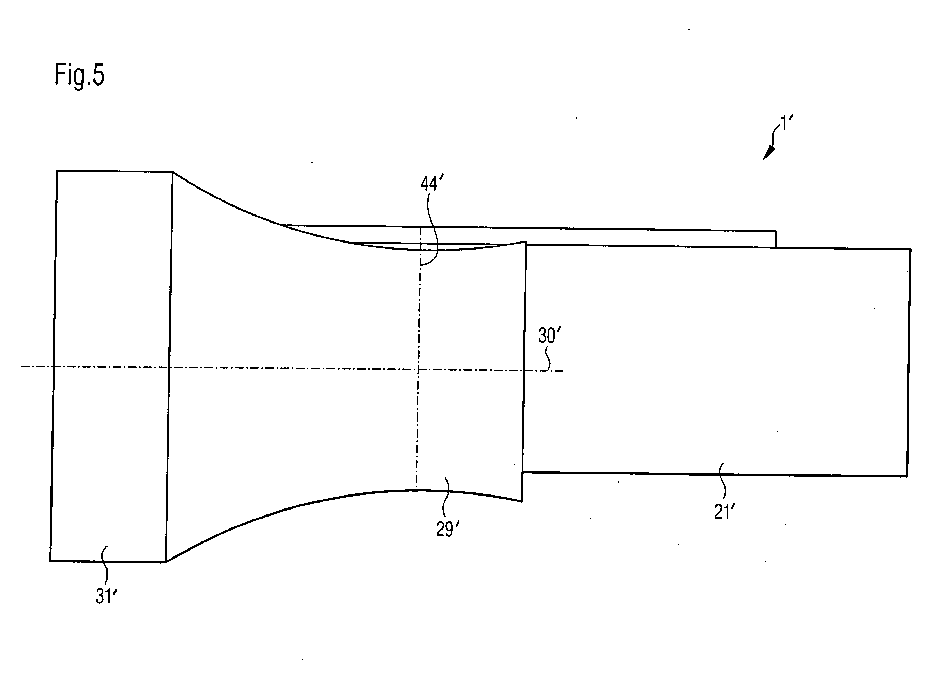

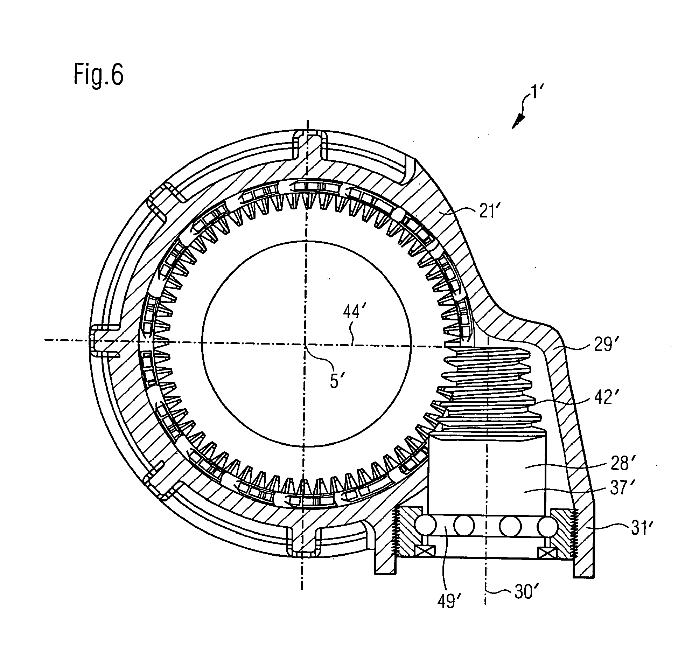

In den Fig. 5 und 6 ist eine zweite Ausführungsform einer erfindungsgemäßen Vorrichtung 1' wiedergegeben. Diese unterscheidet sich von der zuvor beschriebenen Ausführungsform jedoch nur hinsichtlich der Schnecke 28' und deren Gehäuses 29', 31':

Das wesentliche Unterscheidungsmerkmal der Schnecke 28' gegenüber der zuvor beschriebenen besteht darin, dass hier die Länge der Schnecke 28' deutlich verkürzt ist, so dass diese von ihrem verdickten Ende 37' nur bis zu der Ebene 44' reicht, die durch die Drehachse 5' der Vorrichtung 1' aufgespannt wird und von der Längsachse 30' der Schnecke 28' lotrecht durchsetzt ist.

Bei der Ausführungsform nach den Fig. 5 und 6 erstreckt sich der Gewindebereich 36' also ausschließlich diesseits der Ebene 44', mit anderen Worten, es gibt nur den doppelt gewölbten Gewindeabschnitt 42', jedoch keinen zylindrischen Gewindeabschnitt.

Ferner fehlt bei der Schnecke 28' auch ein zweites Lager am dünneren Ende der Schnecke 28' völlig; es gibt insgesamt nur ein Wälzlager 49' am dickeren Schnecken-Ende 37', welches solchermaßen als kombiniertes Radial- und Axiallager ausgebildet ist, bspw. als Kugellager, insbesondere als Vierpunkt-Kugellager. Natürlich sind auch andere Lagerbauformen denkbar, bspw. ein Rollenlager, insbesondere ähnlich zu der ersten Ausführungsform.

Schließlich ist auch der die Schnecke 28' umgebende Gehäuseabschnitt 29', 31' verkürzt und schmiegt sich bereits nahe des inneren Schneckenendes im Bereich der Ebene 44' an den Verlauf des Haupt-Gehäuses 21' an.

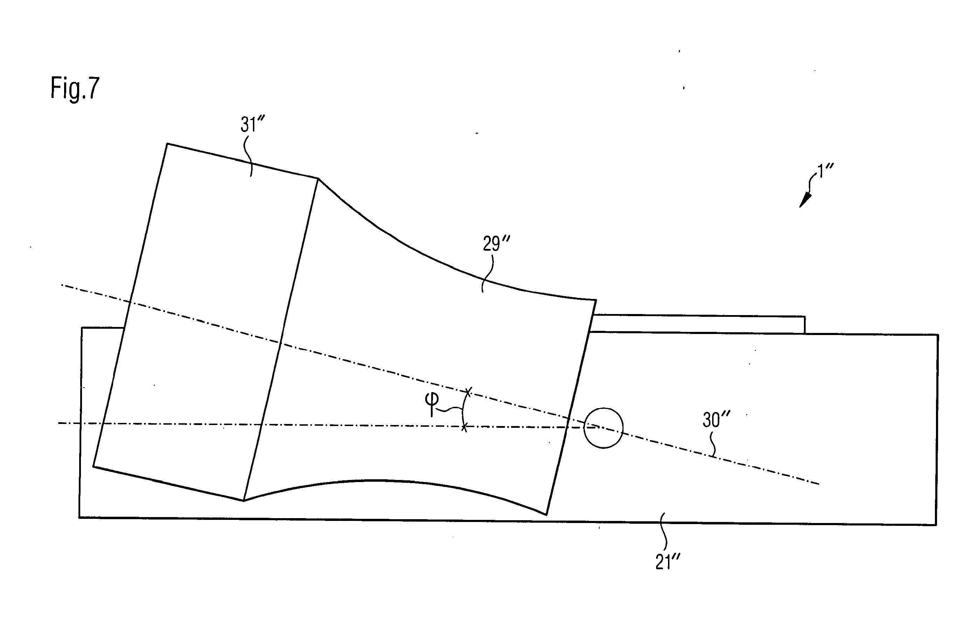

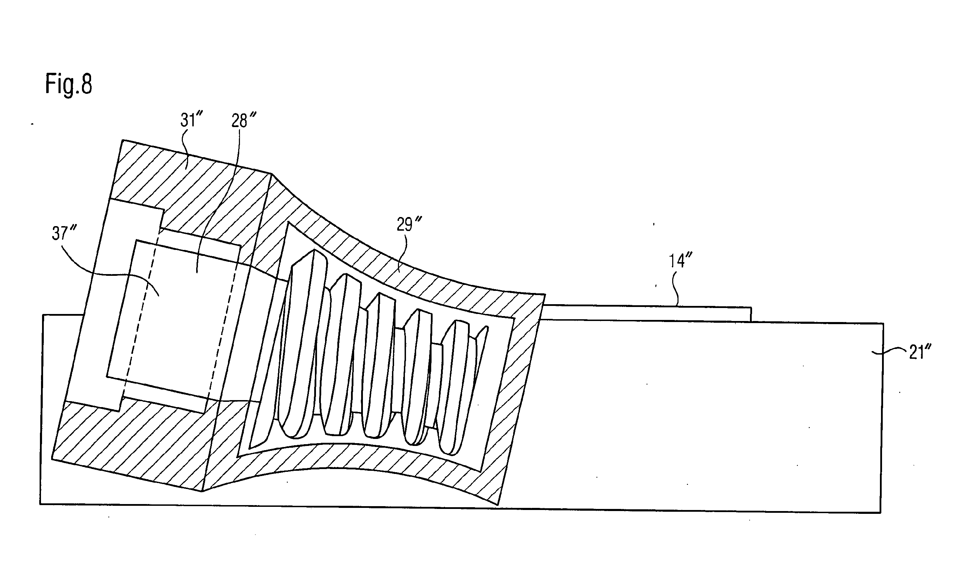

Die Ausführungsform einer erfindungsgemäßen Vorrichtung 1" gemäß den Fig. 7 und 8 unterscheidet sich von der zuletzt beschriebenen Ausführungsform 1' vor allem dadurch, dass die Längsachse 30" der Schnecke 28" nun nicht mehr in oder parallel zu der von der Haupt-Drehachse 5" der Vorrichtung lotrecht durchsetzten Hauptebene ist, sondern geneigt zu dieser Hauptebene verläuft, also einen Winkel ϕ gegenüber jener einschließt. Dieser Neigungswinkel ϕ entspricht vorzugsweise etwa dem Steigungswinkel α des Gewindes 36" im Bereich der Ebene 44", er ist jedoch derart orientiert, dass sich im Eingriffsbereich zwischen Schnecke 28" und Verzahnung 26" beide Winkel näherungsweise kompensieren: α + ϕ = 0, bzw. |α| - |ϕ| = 0. Dies wiederum hat zur Folge, dass die Tangente an die Gewindeerhebung der Schnecke 28" im Bereich des Eingriffspunktes mit der Verzahnung 26" etwa vertikal verläuft. Demzufolge ist als Verzahnung 26" des Schneckenrades keine Schrägverzahnung erforderlich, wodurch sich das Herstellungsverfahren ggf. vereinfacht.

In allen Fällen kann das Gewinde 36, 36', 36" der Schnecke 28, 28', 28" aus dem selben Grundkörper hergestellt sein wie die radial innere(n) Laufbahn(en) der Wälzlager 49, 49', 49", 50, insbesondere durch spanabhebende Bearbeitung eines gemeinsamen Grundkörpers. Dieser Grundkörper und/oder die Einhüllende 41, 41', 41" des fertigen Gewindebereichs 36, 36', 36" weist in allen Fällen ein verjüngtes Ende mit einem minimalen Durchmesser Dₘᵢₙ sowie ein dickeres Ende mit einem maximalen Durchmesser Dₘₐₓ auf. In allen Fällen kann der minimale Durchmesser Dₘᵢₙ dieses Grundkörpers oder dieser Einhüllenden 41, 41', 41" an dem verjüngten Ende gleich oder kleiner sein als 4/5 des maximalen Durchmessers Dₘₐₓ dieses Grundkörpers oder dieser Einhüllenden 41, 41', 41" an dem dickeren Ende: Dₘᵢₙ ≤ Dₘₐₓ * 4/5, beispielsweise gleich oder kleiner als 3/4 des maximalen Durchmessers Dₘₐₓ an dem dickeren Ende: Dₘᵢₙ ≤ Dₘₐₓ * 3/4, insbesondere gleich oder kleiner als 2/3 des maximalen Durchmessers Dₘₐₓ an dem dickeren Ende: Dₘᵢₙ ≤ Dₘₐₓ * 2/3.

### Bezugszeichenliste

- 1: Vorrichtung
- 2: Anschlusselement
- 3: Spalt
- 4: Anschlusselement
- 5: Drehachse
- 6: Mantelfläche
- 7: Mantelfläche
- 8: Mantelfläche
- 9: Mantelfläche
- 10: Stirnfläche
- 11: Stirnfläche
- 12: Stirnfläche
- 13: Stirnfläche
- 14: Anschlussfläche
- 15: Anschlussfläche
- 16: Sacklochbohrung
- 17: Sacklochbohrung
- 18: Abschnitt
- 19: Abschnitt
- 20: Versteifungsrippe
- 21: Gehäuse
- 22: Dichtung
- 23: Lagerung
- 24: Wälzkörper
- 25: Käfig
- 26: Verzahnung
- 27: Einkerbung
- 28: Schnecke
- 29: radiale Erweiterung
- 30: Längsachse
- 31: Ansatz
- 32: Lagerung
- 33: Wälzkörper
- 34: Lagerschale
- 35: Außenmantel
- 36: Gewindebereich
- 37: Schnecken-Ende
- 38: Schnecken-Ende
- 39: freie Kante
- 40: Gewindeerhebung
- 41: Mantelfläche
- 42: Abschnitt
- 43: Abschnitt
- 44: Ebene
- 45: Stirnseite
- 46: Einsenkung
- 47: Nut
- 48: Stirnseite
- 49: Wälzlager
- 50: Wälzlager
- 51: Spalt
- 52: Dichtung
- 53: Ring
- 54: Öffnung
- 55: Mantelabschnitt
- 56: Außenseite

## Patentansprüche

1. Vorrichtung (1;1';1") zur verdrehbaren Kopplung zweier Baugruppen, wie ein Chassis oder Fundament und/oder Maschinen- oder Anlagenteile, umfassend ein erstes, ringförmiges, an seinem Außenumfang (8) von einer Verzahnung (26) umgebenes Anschlusselement (2) zum Anschluss an eine erste Baugruppe, sowie ein dieses Anschlusselement (2) in Form eines Gehäuses (21;21',21") mit einem Spalt (3) außen umgebendes, zweites Anschlusselement (4) zum Anschluss an eine zweite Baugruppe, wobei in dem Spalt (3) zwischen den beiden Anschlusselementen (2,4) ein oder mehrere Reihen von Wälzkörpern (33) zur verdrehbaren Lagerung (23) der beiden Anschlusselemente (2,4) aneinander sowie zur Aufnahme von Axial- und Radialkräften und Kippmomenten vorgesehen sind, und wobei an dem Gehäuse (21) ein Ansatz (29,31) zur Aufnahme und Lagerung einer mit der Verzahnung (26) des ersten Anschlusselements (2) kämmenden Schnecke (28) vorgesehen ist, **dadurch gekennzeichnet, dass** die Einhüllende (41) des Gewindebereichs (36) der Schnecke (28) nicht symmetrisch ist bezüglich einer Querschnittsebene (44) mittig zwischen den beiden stirnseitigen Enden (37,38) des Gewindebereichs (36).

2. Vorrichtung (1;1';1") nach Anspruch 1, **dadurch gekennzeichnet, dass** der Durchmesser der Einhüllenden (41) des Gewindebereichs (36) der Schnecke (28) an einem stirnseitigen Ende (38) des Gewindebereichs (36) kleiner ist als an dem anderen stirnseitigen Ende (37) des Gewindebereichs (36).

3. Vorrichtung (1;1';1") nach Anspruch 1 oder 2, **dadurch gekennzeichnet, dass** die Umhüllende (41) des Schneckengewindes (36) sich zwischen den beiden stirnseitigen Enden (37,39) des Gewindebereichs (36) in einer axialen Richtung zumindest bereichsweise stetig und differenzierbar verjüngt und in dem ggf. verbleibenden Bereich jedenfalls nicht erweitert.

4. Vorrichtung (1;1';1") nach einem der Ansprüche 1 bis 3, **dadurch gekennzeichnet, dass** das Gewinde (36) der Schnecke (28) an einer ersten Seite (42) einer von der Längsachse (30) der Schnecke (28) lotrecht durchsetzten Schnittebene (44) durch den Drehmittelpunkt (5) des Schwenktriebs (1) als Globoidgewinde ausgebildet ist, d. h. mit einer Einhüllenden (41), die durch einen um die Längsachse (30) der Schnecke (28) rotierenden Kreis etwa von der Abmessung (R) und der Lage (5) der Einhüllenden des Schneckenradgewindes (26) gebildet wird.

5. Vorrichtung (1;1';1") nach einem der vorhergehenden Ansprüche, **dadurch gekennzeichnet, dass** das Gewinde (36) der Schnecke (28) an einer zweiten Seite (43) jenseits einer von der Längsachse (30) der Schnecke (28) lotrecht durchsetzten Schnittebene (44) durch den Drehmittelpunkt (5) des Schwenktriebs (1) nicht als Globoidgewinde ausgebildet ist, d. h. nicht mit einer Einhüllenden, die durch einen um die Längsachse (30) der Schnecke (28) rotierenden Kreis etwa von der Abmessung (R) und der Lage (5) der Einhüllenden des Schneckenradgewindes (26) gebildet wird.

6. Vorrichtung (1;1';1") nach Anspruch 5, **dadurch gekennzeichnet, dass** das Gewinde (36) der Schnecke (28) an einer zweiten, dem globoidförmigen Gewindeabschnitt (42) gegenüber liegenden Seite (43) einer von der Längsachse (30) der Schnecke (28) lotrecht durchsetzten Schnittebene (44) durch den Drehmittelpunkt (5) des Schwenktriebs (1) eine zylindrische oder kegelig sich verjüngende Einhüllende (41) aufweist.

7. Vorrichtung (1;1';1") nach einem der vorhergehenden Ansprüche, **dadurch gekennzeichnet, dass** die Umhüllende (41) des globoidförmigen Gewindeabschnitts (42) stetig und differenzierbar in die Umhüllende (41) des anschließenden Gewindeabschnitts (43) übergeht.

8. Vorrichtung (1;1';1") nach einem der Ansprüche 4 bis 7, **dadurch gekennzeichnet, dass** die Gewindeabschnitte (42,43) zu beiden Seiten der von der Längsachse (30) der Schnecke (28) lotrecht durchsetzten Schnittebene (44) durch den Drehmittelpunkt (5) des Schwenktriebs (1) unterschiedliche Längen aufweisen.

9. Vorrichtung (1;1';1") nach einem der Ansprüche 4 bis 8, **dadurch gekennzeichnet, dass** die Länge des nicht von einem Globoid umhüllten Gewindeabschnitts (43) kürzer ist als die Länge des globoidförmigen Gewindeabschnitts (42).

10. Vorrichtung (1;1';1") nach einem der vorhergehenden Ansprüche, **dadurch gekennzeichnet, dass** das Gewinde (36) nur von einer Seite (42) bis zu einer von der Längsachse (30) der Schnecke (28) lotrecht durchsetzten Schnittebene (44) durch den Drehmittelpunkt (5) des Schwenktriebs (1) heranreicht und dort endet.

11. Vorrichtung (1;1';1") nach einem der vorhergehenden Ansprüche, **dadurch gekennzeichnet, dass** die Schnecke (28) nur im Bereich einer Stirnseite (37) der Schnecke oder des Gewindebereichs (36) gelagert ist, insbesondere im Bereich der Schnecken- oder Gewindestirnseite (37) mit dem größeren Durchmesser.

12. Vorrichtung (1;1';1") nach einem der vorhergehenden Ansprüche, **dadurch gekennzeichnet, dass** die Längsachse (30) der Schnecke (28) gegenüber der Hauptebene des Schwenktriebs um einen Winkel ϕ geneigt ist.

13. Vorrichtung (1;1';1") nach Anspruch 12, **dadurch gekennzeichnet, dass** der Neigungswinkel ϕ dem Steigungswinkel α = sin (p/2d) des Schneckengewindes (36) auf Höhe der von der Längsachse (5) der Schnecke (28) lotrecht durchsetzten Schnittebene (44) durch den Drehmittelpunkt (5) des Schwenktriebs (1) entspricht, wobei p die Gewindesteigung und d der Durchmesser der Schnecke (28) auf der betreffenden Schnittebene (44) ist.

14. Vorrichtung (1;1';1") nach einem der vorhergehenden Ansprüche, **dadurch gekennzeichnet, dass** der Querschnitt des ersten und/oder zweiten Anschlusselements (2,4) im Bereich einer Stirnseite (10;12) unterschiedlich zu dem Querschnitt des betreffenden Anschlusselements (2,4) im Bereich der gegenüber liegenden Stirnseite (11;13) ist.

15. Vorrichtung (1;1';1") nach einem der vorhergehenden Ansprüche, **dadurch gekennzeichnet, dass** der Querschnitt des ersten Anschlusselements (2) an einer ersten Stirnseite (11) des Lagers (1) gegenüber dem Querschnitt an der gegenüberliegenden Stirnseite (10) verjüngt ist, während der Querschnitt des zweiten Anschlusselements (4) an der ersten Stirnseite (13) des Lagers (1) gegenüber dem Querschnitt an der gegenüber liegenden Stirnseite (12) verbreitert ist.
